# EUROPEAN PATENT SPECIFICATION

(11) **EP 4 427 886 B1**
(45) Date of publication and mention of the grant of the patent: **22.10.2025**
(21) Application number: 23160206.1
(22) Date of filing: 06.03.2023
(51) Int. Cl.: B25F 5/00, B23D 59/00

(54) **OPTICAL COMMUNICATION THROUGH EXISTING LED**
OPTISCHE KOMMUNIKATION DURCH BESTEHENDE LED
COMMUNICATION OPTIQUE PAR DEL EXISTANTE

(43) Date of publication of application: 11.09.2024
(73) Proprietor: Husqvarna AB, 561 82 Huskvarna (SE)
(72) Inventor: Werner, Gerhard, 88471 Laupheim (DE); Behmueller, Stefan, 89608 Griesingen (DE); Lorenzin, Ramona, 89073 Ulm (DE); Schaeffner, Daniel, 73460 Hüttlingen (DE)
(74) Representative: Finkele, Rolf

(56) References cited:
- EP-A2- 1 136 188
- US-A1- 2021 152 182
- US-B2- 9 652 217
- US-B2- 9 766 608

## Description

### TECHNICAL FIELD

The present disclosure relates to an electric tool. More specifically, the present disclosure relates to the electric tool having a digital control unit for performing bidirectional communication via at least one light-emitting diode (LED) based human machine interface (HMI).

### BACKGROUND OF THE INVENTION

Electric tools such as electronic power tools are widely used both in industries and at homes. Commonly known electric tools include electric drilling tools, garden tools, watering tools, power tools, electric cutting tools such as chain saws, hedge trimmers, drills, power wrench, saws and the like.

Conventionally, the electric tool may include a tool main body configured to be able to mount printed circuit board assembly, and a battery pack. The tool main body may also include an electric motor, and a controller for controlling the electric motor.

During the development and manufacturing phase, comprehensive testing of the conventional electric tool is often carried out. The testing may include measurement and analysis of quantitative parameters of an electronic system within the electric tool, and/or parameters of the motor of the electric tool. The parameters such as the motor current, the output battery current, the temperature of accumulator packs or cells, the temperature of the electronic system, and the electrical voltage are some of the examples. The measurement and analysis of such parameters helps in optimal configuration and achieving robustness of the electric tool.

For measurement of parameters of the conventional electric tool, a unidirectional wired service interface is accessed. To access this interface, the electric tool either needs to be opened completely or housing shells of the conventional electric tool are to be provided with through-holes via which diverse electrical measuring lines can be routed out. In addition, it may be necessary to modify line lengths or routes of the internal motor control electronics to route them out of the electric tool. Once the electric tool is opened for measurements, it needs to be reassembled. During reassembly, the electric tool can be put into bad condition leading to structural ambiguities of the electric tool, such as loose screws or pinched cables. The measurements done from the measuring lines via the through-holes may lead to considerable interventions and modifications of the electric tool, which could have a disadvantageous effect on the internal marginal conditions of the electric tool.

A known electric tool overcomes some of the limitations of the conventional electric tool, using which certain measurements can be taken and transmitted without opening the housing of the conventional electric tool or without the presence of through holes for accessing the electrical measuring lines. Such electric tool houses a light-emitting diode (LED) enabled human machine interface which is capable of displaying a battery status and/or error states and performing unidirectional communication by illuminating light-emitting diodes (LEDs).

An example of such an electric tool is provided in US Patent US 9766608 B2 (hereinafter referred to as '608 reference). The '608 reference provides an electric tool which can communicate operational data of the electric tool in a more optimized manner. The '608 reference discloses an electric tool having an electrical control connected to a digital control unit. The digital control unit receives at least one analog signal from the electrical control via at least one conducting line to transmit at least one digital signal over the at least one digital line including operational data of the electric tool. For the data transmission the electric tool is using an interface formed from control lines of a light-emitting diode (LED).

In another type of known electric tool, the electric tool houses two LEDs and a controller. The one of the two LEDs within the electric tool is connected in a forward direction with the controller for transmitting LED light towards an external acquisition device. On the other hand, the second of the two LEDs within the electric tool is connected in a backward direction with the controller for receiving data transmitted by the external acquisition device. Hence, the second of the two LEDs uses conductive effect of the LED to perform reception of the data.

### SUMMARY OF THE INVENTION

In view of the above, it is an objective of the present invention to solve or at least reduce the drawbacks discussed above. The objective is at least partially achieved by an electric tool which is capable of communicating its operational data wirelessly and in a more efficient manner.

According to an aspect of the present invention, the electric tool includes a first digital control unit that generates a first digital data signal for transmission. The first digital data signal includes operational data of the electric tool. The electric tool also includes an interface that is configured to transmit the first digital data signal. The interface further includes at least one light-emitting diode (LED_t) connected with the first digital control unit in a forward direction. The at least one light-emitting diode (LED_r) is configured to transmit the first digital data signal. The electric tool is characterized in that the interface further comprises at least one light-emitting diode (LED_r) configured to receive a second digital data signal. The electric tool is characterized in that a second digital control unit comprises a detection circuit for detection of the second digital data signal. The at least one light-emitting diode (LED_r) is connected with the second digital control unit in a forward direction.

Thus, the present disclosure provides an improved electric tool that may be cost-effective, reliable, and simple in design. The electric tool may reliably use the interface comprising of at least one light-emitting diode (LED_t) and at least one light-emitting diode (LED_r) for transmission of first digital data signal as well as reception of second digital data signal respectively. By transmission and reception of the first digital data signal and second digital data signal by the at least one light-emitting diode (LED_t) and the at least one light-emitting diode (LED_r) respectively, the electric tool may advantageously allow the transmission and reception of the first digital data signal and the second digital data signal without opening the housing of the electric tool. The electric tool may further advantageously provide wireless transmission of the first digital data signal by the at least one light-emitting diode (LED_t) and similarly wireless reception of the second digital data signal by the at least one light-emitting diode (LED_r). Furthermore, the electric tool may advantageously provide usage of standard LEDs leading to cost reliability for transmission and reception of the first digital data signal and second digital data signal by the at least one light-emitting diode (LED_t) and the at least one light-emitting diode (LED_r) respectively. Further, as the at least one light-emitting diode (LED_r) is connected in a forward biased connection similar to the at least one light emitting diode (LED_t), the need of change in connection of at least one light-emitting diode (LED_t) and the at least one light-emitting diode (LED_r) is removed, hence constructional cost and efforts for structural implementation of the electric tool is considerably reduced.

Further, an interface of an electric tool comprises at least one light-emitting diode (LED_r) configured to receive a second digital data signal. In return to the received second digital data signal, the at least one light-emitting diode (LED_r) generates a photovoltaic effect leading to generation of an analog LED voltage by the at least one light-emitting diode (LED_r) itself. This way the at least one light-emitting diode (LED-r) forms a voltage source of high impedance. Based on the photovoltaic effect generated by the at least one light-emitting diode (LED_r), the at least one light-emitting diode (LED_r) can also be advantageously connected in a forward biased connection similar to the at least one light emitting diode (LED_t) is connected. This way the constructional cost of the electric tool is reliably reduced.

According to an exemplary embodiment of the invention, the second digital control unit comprises a detection circuit. The detection circuit may include a comparator and is configured for detection of the second digital data signal received by the at least one light-emitting diode (LED_r). By using the comparator, an accurate and reliable detection of the second digital data signal is achieved.

According to an exemplary embodiment of the invention, the second digital control unit comprises a detection circuit. The detection circuit may include a P-MOSFET and is configured for detection of the second digital data signal received by the at least one light-emitting diode (LED_r). By using the P-MOSFET, an accurate, cheap, and reliable detection of the second digital data signal is achieved.

According to an exemplary embodiment of the invention, the second digital control unit comprises a detection circuit. The detection circuit may include an N-MOSFET and is configured for detection of the second digital data signal received by the at least one light-emitting diode (LED_r). By using the N-MOSFET, an accurate, cheap, and reliable detection of the second digital data signal is achieved.

According to an exemplary embodiment of the invention, the second digital control unit comprises a detection circuit. The detection circuit may include a micro-controller including an analog to digital converter (ADC) and is configured for detection of the second digital data signal received by the at least one light-emitting diode (LED_r). By using the analog to digital converter (ADC), an accurate, cheap and reliable detection of the second digital data signal is achieved.

The at least one light-emitting diode (LED_r) connects to the detection circuit in forward direction for detection of the received second digital data signal. By using the detection circuit, an accurate and reliable detection of the second digital data signal received by the at least one light-emitting diode (LED_r) is achieved.

The second digital data signal is received by the at least one light-emitting diode (LED_r) via photoelectric effect. The received second digital data signal by the at least one light-emitting diode (LED_r) is converted into analog LED voltage. The detection circuit then processes the analog LED voltage and hence advantageously reads the received second digital data signal. Any other possible detection circuit type for the connection with the at least one of the light-emitting diode (LED_r) is well within the scope of the present invention.

According to an exemplary embodiment of the invention, the electric tool is configured to perform bi-directional communication via the combination of at least one light-emitting diode LED_t and the at least one light-emitting diode LED_r. The electric tool hence advantageously overcomes the limitation of unidirectional communication performed by the previously known electric tools.

According to an exemplary embodiment of the invention, the operational data transmitted by the at least one light-emitting diode (LED_t) includes at least one of a testing data, a battery status, and an error state. The electric tool hence advantageously overcomes the limitation of opening the housing of the electric tool or accessing the printed circuit board or electrical conducting lines through holes on the housing to read the operational data of the electric tool.

According to an exemplary embodiment of the invention, the second digital data signal received by the at least one light-emitting diode (LED_r) includes at least one of programming commands, configuration commands, test commands, and process commands in end-of-line (EOL) testing. The electric tool hence advantageously overcomes the limitations of previously known electric tool by receiving second digital data signal wirelessly without opening the housing of the electric tool or accessing the printed circuit board/electrical conducting lines through holes on the housing.

According to an exemplary embodiment of the invention, the electric tool comprises of a digital control module. The digital control module further includes the first digital control unit and the second digital control unit. The main task of the first digital control unit and the second digital control unit of the digital control module is to control the functioning of the electric tool's transmission and reception of the first and the second digital data signal. The electric tool hence advantageously overcomes the limitations of previously known electric tool by appropriately controlling the internal circuitry of the electric tool responsible for transmission and reception of the first and the second digital data signal.

Before discussing the invention with the help of the drawings the invention will be briefly discussed in general. Most of products have a human machine interface (HMI) included which shows battery status and error states by illuminating LEDs. With current invention, it is possible to use this HMI as an optical interface to read and send data, configure or test a product and program new software on the product without the need to open a housing of a product. For the applications of gardening, it is suitable to have a secondary transmitter (PC side) directly coupled to the HMI so that only minimal distance appears between a sender and a receiver. However, in general, it could be possible to increase the distance by using a more sensitive and powerful secondary transmitter. There will be only minimum cost impact because standard components are used for sending and receiving. The encoding and decoding process will be realized by software.

The advantage is, that for receiving the signal, a standard LED is used and is connected in forward direction for emitting mode to the controller. The photovoltaic effect is used, which means that the LED itself generates a voltage in forward direction while it is illuminated by light. This voltage source is very high impedance. This is why, some kind of high impedance detection circuit needs to be used to detect the signal. This can be done for example by a comparator IC, or by the use of an MOSFET gate, or it can be directly evaluated using microcontrollers analog to digital converters (ADC). By using this photovoltaic effect, the LED can be connected in forward direction for receiving (Cathode to GND and Anode to controller pin). It is then connected in the same way for receiving and transmitting and there is no need to change the connection. With our method compared to others, no additional interactions for changing polarity between sending and receiving are necessary.

For receiving an optimized color combination of the LEDs should be used. E.g. white LED for sending on PC-side and red LED for receiving on device-side. The same LED for sending and receiving can be used. It is also possible to use different LEDs for sending and receiving. It is not just the HMI LEDs, which can be used for communication. It would also be possible to use a functional LED or only a not used LED on the PCB. Some of the further possible functions include programming of the appliance via optical interface, and process commands in EOL Test (End-Of-Line-Test). Additional components or products possible include accessory for pumps, which contains the intelligence of a water computer and realizes a time-controlled pump, low-Cost valve including programming time control with smartphone and mobile application instead of using expensive bluetooth or smart integration. It is also possible to read product status with smartphone and mobile applications. It may be possible to establish communication with Smartphone and mobile application (a camera and an LED), error identification together with customer and subsequent service. Some of the advantages include minimum hardware costs with maximum benefit in development, production, series production and service for the products. Further, there is possibility of new processes and products.

Key technical aspects include usage of a standard LED for receiving data and realize a bidirectional communication with existing components using the photovoltaic effect of the LED. These standard LEDs are connected in forward direction. Further, wireless communication without the need to open the housing of the tool can be established. This idea is not limited to garden and power tools only, and may also be used for watering and other products.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a previously known electric tool in unidirectional communication mode;
**FIG. 2** illustrates an electric tool in bi-directional communication mode;
**FIG. 3A** illustrates connection of LED_t and LED_r with a micro-controller;
**FIG. 3B** illustrates connection of LED_t and LED_r with a comparator separate from a micro-controller;
**FIG. 3C** illustrates connection of LED_t and LED_r with an N-type MOSFET separate from a micro-controller; and
**FIG. 3D** illustrates connection of LED_t and LED_r with a P-type MOSFET separate from a micro-controller.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

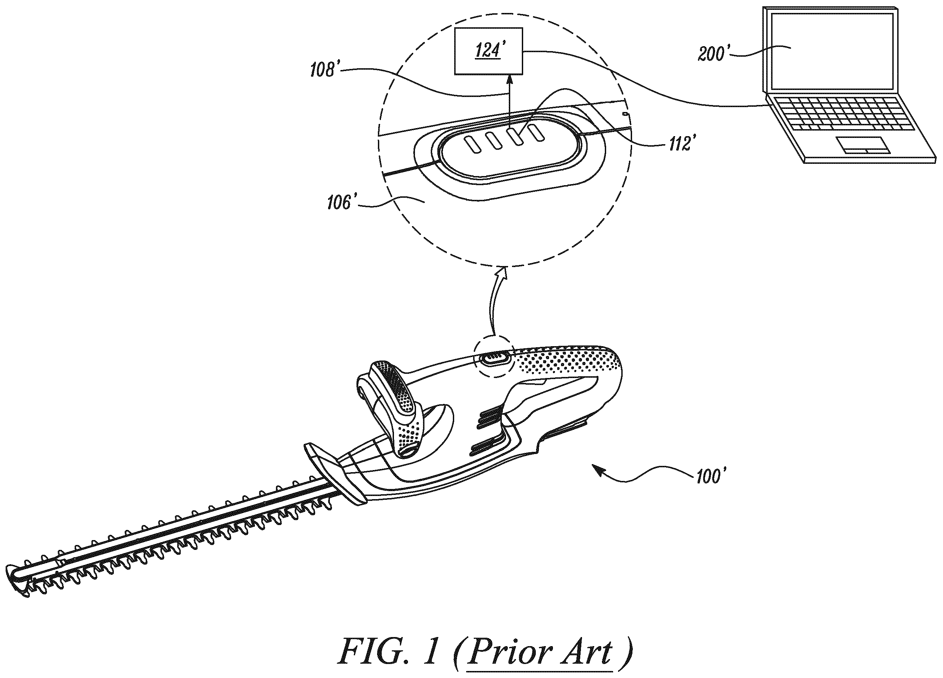

**FIG. 1** shows an already known electric tool **100'** provided with at least one light-emitting diode (LED) **112',** which, during standard operation, is used to illuminate a workspace, for example, or to indicate a battery status of the power tool **100'.** The electric tool **100'** further includes a digital control unit connected to the light-emitting diode (LED) **112'.** The digital control unit in the electric tool **100'** can evaluate electric tool's operational data and transmit the evaluated operational data in the form of a coded optical signal **108'** via the light-emitting diode (LED) **112'** towards an external secondary communication device **200'.** The electric tool **100'** includes an interface **106'.**

The external secondary communication device **200'** acquires the transmitted coded optical signal **108'** including the operational data through an optical photo-sensitive acquisition unit **124'** and displays the received operational data on its display **200'** using the photo-electric effect mechanism. The external secondary communication device **200'** may include and is not limited thereof to a computer device, a laptop device, a smartphone device, an ultrabook, a tablet computer, or any other similar smart device having optical communication capabilities.

This way, the electric tool **100'** is capable of transmitting the tool's operational data **108'** and hence performing a unidirectional communication with the external secondary communication device **200'.**

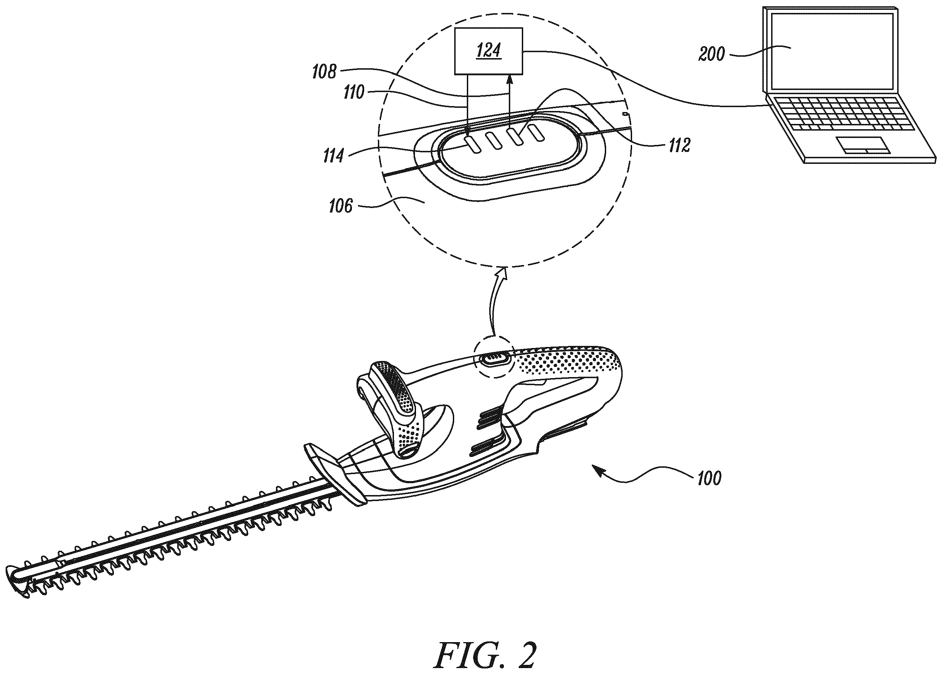

**FIG. 2** illustrates an electric tool **100** as per the various aspects of the present invention. The electric tool **100** is provided with a first digital control unit, a second digital control unit, an interface **106,** at least one light-emitting diode (LED_t) **112,** at least one light-emitting diode (LED_r) **114,** and a detection circuit. The first digital control unit generates a first digital data signal **108** which includes operational data of the electric tool **100** for transmission. The interface **106** of the electric tool **100** is an optical interface and may be a human machine interface (HMI). The interface **106** comprises the at least one light-emitting diode (LED_t) **112** for transmission of the first digital data signal **108** generated by the first digital control unit.

The first digital data signal **108** includes operational data of the electric tool **100.** The operational data of the electric tool may include at least one of, and not limited to, a testing data, a battery status, and an error state.

The first digital data signal **108** is an optically encoded digital signal, such as an optical pulsed signal, where the data generated by the first digital control unit for transmission is encoded in pulses. The optical signals are electromagnetic (EM) energy waves, or EM radiation which can be of various types such as, but not limited to, RF, light, X-rays, and gamma rays. The optical signals in the EM spectrum comprise oscillating electric fields and magnetic fields that are orthogonal to one another, and traveling in a particular direction. The digital optical signals use binary coding to transmit a series of bits across an optical link. For optical encoding various non-limiting encoding techniques can be used.

The interface **106** of the electric tool **100** further comprises at least one light-emitting diode (LED_r) **114.** The at least one light-emitting diode (LED_r) **114** is configured to receive a second digital data signal **110.** The second digital data signal **110** includes at least one of, and not limited to, programming commands, configuration commands, test commands, and/or process commands in end-of-line (EOL) testing for the electric tool **100.**

The second digital data signal **110** is an optically encoded digital signal, such as an optical pulsed signal, where the data received by the at least one light-emitting diode (LED_r) **114** is encoded in pulses. The optical signals are electromagnetic (EM) energy waves, or EM radiation which can be of various types but not limited to such as RF, light, X-rays, and gamma rays. The optical signals in the EM spectrum comprise oscillating electric fields and magnetic fields that are orthogonal to one another, and traveling in a particular direction. The digital optical signals use binary coding to transmit a series of bits across an optical link. For optical encoding various non-limiting encoding techniques can be used.

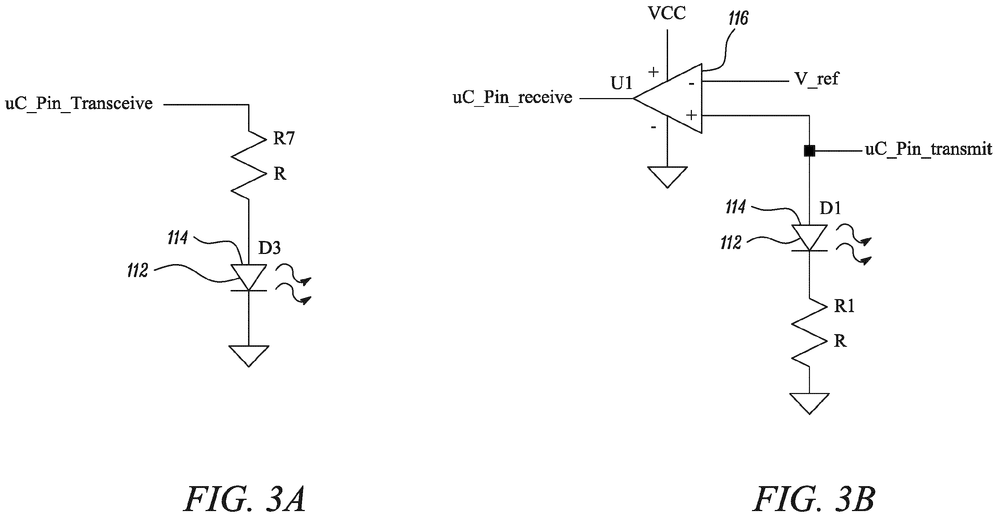

The electric tool **100** also comprises a second digital control unit. The second digital control unit further comprises a detection circuit such as a comparator **116** (shown in **FIG. 3B**), which is configured to detect the second digital data signal **110** received by the at least one light-emitting diode (LED_r) **114.** The second digital data signal **110** is in the form of a digital pulse signal. The second digital data signal **110** when received by the at least one light-emitting diode (LED_r) **114,** initiates the photo-voltaic effect in which the at least one light-emitting diode (LED_r) **114** forms a voltage source of high impedance. In other words, the at least one light-emitting diode (LED_r) **114** itself generates a voltage in forward direction while it is illuminated by the received second digital data that is received optical digital data signal. Hence, the at least one light-emitting diode (LED_r) **114** becomes a voltage source of high impedance. The photo-voltaic effect is a process that generates voltage when exposed to a light pulse or source. The photo-voltaic effect of the light-emitting diode is a general concept and well known by the person ordinarily skilled in the art.

In order to detect the information encoded in the second digital data signal **110** second digital data signal **110** received by the at least one light-emitting diode (LED_r) **114,** the at least one light-emitting diode (LED_r) **114** is connected to the detection circuit such as the comparator **116.** The comparator **116** is a high-impedance comparator so that when the at least one light-emitting diode (LED_r) **114,** becomes a voltage source of high impedance, the comparator **116** can optimally detect the second digital data signal **110** received by the at least one light-emitting diode (LED_r) **114.**

By using the photo-voltaic effect, the at least one light-emitting diode (LED_r) **114** can be advantageously connected in forward direction for receiving the second digital data signal **110.** The forward direction connection of the at least one light-emitting diode (LED_r) **114** implies connection of the at least one light-emitting diode's (LED_r) **114** cathode terminal to the ground and anode terminal to a controller pin. LED_r and LED_t can also be the same LED.

**FIGS. 3A-3D** illustrate the forward direction connection of the at least one light-emitting diode (LED_r) **114.** By connecting the at least one light-emitting diode (LED_r) **114** in the forward direction, the same LED can be used for transmission of the first digital data signal **108** as well. In other words, both the at least one light-emitting diode (LED_t) **112,** and the at least one light-emitting diode (LED_r) **114** either individually or in combination together can be used for transmission of the first digital data signal **108** and reception of the second digital data signal **110** respectively. Hence, by connecting both the at least one light-emitting diode (LED_t) **112,** and the at least one light-emitting diode (LED_r) **114** in forward direction, the circuitry of the electric tool (**100**) becomes less complex, reliably cost-effective and advantageously achieves bi-directional communication with an external secondary communication device **200.**

**FIG. 3A** shows an embodiment of the invention in which at least one light emitting diode (LED_t) **112** is connected in forward direction with a pin of a micro-controller which is a first digital control unit. A first digital data signal **108** is generated by the micro-controller within the first digital control unit. A connecting pin of the micro-controller which connects with the at least one light emitting diode (LED_t) **112,** transmits the generated first digital data signal **108** towards the at least one light emitting diode (LED_t) **112.** The at least one light emitting diode (LED_t) **112** then transmits the first digital data signal **108** in the form of light pulses towards an optical acquisition device of an external secondary communication device.

**FIG. 3A** shows another embodiment of the invention in which at least one light-emitting diode (LED_r) **114** is connected in forward direction with a pin of a detection circuit includes a micro-controller which is a second digital control unit. A second digital signal **110** received by the at least one light-emitting diode (LED_r) **114** initiates a photovoltaic effect, where the at least one light-emitting diode (LED_r) **114** converts the received second digital signal **110** to an analog voltage. The signal levels of the generated analog voltage is very low and hence needs to be processed from analog to digital signal by the second digital control unit. In order to process the analog signal into the digital signal an internal analog to digital comparator (**ADC**) of the micro-controller reads the analog voltage and compares it with a threshold value. which is set beforehand to meet signal strength of the at least one light-emitting diode (LED_r) **114** in receiving mode. The micro-controller hence detects the received second digital data signal **110.**

**FIG. 3A** further shows yet another embodiment of the invention in which the at least one light-emitting diode LED_t **112** for transmission of the first digital data signal **108** and the at least one light-emitting diode LED_r **114** for receiving the second digital data signal **110** can be implemented by one common standard light-emitting diode LED. Further, with such an arrangement the first digital control unit and the second digital control unit can also be implemented as one common digital control module, hence, advantageously reducing the product cost.

**FIG. 3B** shows another embodiment of the invention, in which a detection circuit including a comparator **116** is a separate unit and external to a micro-controller. This implementation is used to reduce software complexity and/or micro-controller hardware requirements for signal processing. This also helps with the micro-controllers, of which internal comparators are not available for processing. **FIG. 3B** shows at least one light-emitting diode (LED_r) **114** is connected in forward direction with the detection circuit including the comparator **116.** The comparator **116** and the micro-controller together form a second digital control unit. A second digital signal **110** received by the at least one light-emitting diode (LED_r) **114** initiates a photovoltaic effect, where the at least one light-emitting diode (LED_r) **114** converts the received second digital signal **110** to an analog voltage. The signal levels of the generated analog voltage is very low and hence needs to be processed from analog to digital signal by the second digital control unit. To process the analog signal into the digital signal the comparator **116** reads the analog voltage and compares it with a threshold value. which is set beforehand to meet signal strength of the at least one light-emitting diode (LED_r) **114** in receiving mode. The comparator **116** hence detects the received second digital data signal **110.**

**FIG. 3B** further shows another embodiment of the invention in which the at least one light-emitting diode LED_t **112** for transmission of the first digital data signal **108** and the at least one light-emitting diode LED_r **114** for receiving the second digital data signal **110** can be implemented by one common standard light-emitting diode LED. Further, with such an arrangement the first digital control unit and the second digital control unit can also be implemented as one common digital control module, hence, advantageously reducing the product cost.

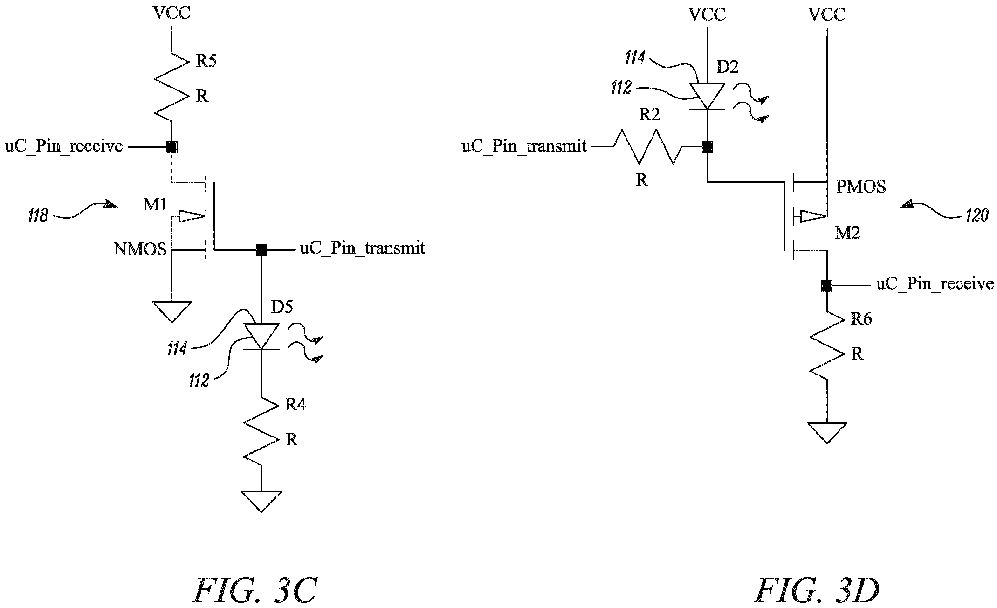

**FIG. 3C** shows another embodiment of the invention, in which a detection circuit is a separate unit and external to a micro-controller. The detection circuit in this embodiment is an N-type MOSFET (NMOS) **118.** This implementation uses the Gate-Source voltage of the MOSFET **118** as a threshold value.

**FIG. 3C** shows at least one light-emitting diode (LED_r) **114** is connected in forward direction with N-MOSFET **118.** The N-MOSFET **118** and the micro-controller together form a second digital control unit. A second digital signal **110** received by the at least one light-emitting diode (LED_r) **114** initiates a photovoltaic effect, where the at least one light-emitting diode (LED_r) **114** converts the received second digital signal **110** to an analog voltage. The signal levels of the generated analog voltage is very low and hence needs to be processed from analog to digital signal by the second digital control unit. In order to process the analog signal into the digital signal the N-MOSFET **118** reads the analog voltage and compares it with a threshold value. which is set beforehand to meet signal strength of the at least one light-emitting diode (LED_r) **114** in receiving mode. If the analog voltage on the at least one light-emitting diode (LED_r) **114** is higher than the threshold of the N-MOSFET **118,** then the N-MOSFET **118** turns ON and generates a defined digital signal level. The N-MOSFET **118** hence detects the received second digital data signal **110.** This implementation is cost-effective and used to reduce software complexity and/or micro-controller hardware requirements for signal processing. This also helps with the micro-controllers, of which internal comparators are not available for processing. However, the drawback of this implementation is that V_{GS'TH} is temperature sensitive and has a high tolerance. The value is also fix and cannot be adjusted to different signal strengths of the the at least one light-emitting diode (LED_r) **114** in receiving mode.

**FIG. 3C** further shows another embodiment of the invention in which the at least one light-emitting diode LED_t **112** for transmission of the first digital data signal **108** and the at least one light-emitting diode LED_r **114** for receiving the second digital data signal **110** can be implemented by one common standard light-emitting diode LED. Further, with such an arrangement the first digital control unit and the second digital control unit can also be implemented as one common digital control module, hence, advantageously reducing the product cost.

**FIG. 3D** shows a similar implementation as shown in **FIG. 3C** except that the detection circuit in this embodiment is a P-type MOSFET (PMOS) **120.** The PMOS **120** has inverted function than the NMOS **118.** **FIG. 3D** shows at least one light-emitting diode (LED_r) **114** is connected in forward direction with P-MOSFET **120.** The P-MOSFET **120** and the micro-controller together form a second digital control unit. A second digital signal **110** received by the at least one light-emitting diode (LED_r) **114** initiates a photovoltaic effect, where the at least one light-emitting diode (LED_r) **114** converts the received second digital signal **110** to an analog voltage. The signal levels of the generated analog voltage is very low and hence needs to be processed from analog to digital signal by the second digital control unit. In order to process the analog signal into the digital signal the P-MOSFET **120** reads the analog voltage and compares it with a threshold value. which is set beforehand to meet signal strength of the at least one light-emitting diode (LED_r) **114** in receiving mode. If the analog voltage on the at least one light-emitting diode (LED_r) **114** is higher than the threshold of the P-MOSFET **120,** then the P-MOSFET **120** turns ON and generates a defined digital signal level. The P-MOSFET **120** hence detects the received second digital data signal **110.** This implementation is cost-effective and used to reduce software complexity and/or micro-controller hardware requirements for signal processing. This also helps with the micro-controllers, of which internal comparators are not available for processing.

**FIG. 3D** further shows another embodiment of the invention in which the at least one light-emitting diode LED_t **112** for transmission of the first digital data signal **108** and the at least one light-emitting diode LED_r **114** for receiving the second digital data signal **110** can be implemented by one common standard light-emitting diode LED. Further, with such an arrangement the first digital control unit and the second digital control unit can also be implemented as one common digital control module, hence, advantageously reducing the product cost.

Thus, the present disclosure provides an improved electric tool **100** that may be cost-effective, reliable, and simple in design. The electric tool **100** includes at least one light-emitting diode LED_t **112** for transmitting the first digital data signal **108** and at least one light-emitting diode LED_r **114** for receiving the second digital data signal **110** using a photovoltaic effect, hence, achieving a bi-directional communication between the electric tool **100** and an external secondary communication device **200.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100'**: Electric Tool
- **106'**: Interface
- **108'**: First digital data signal
- **112'**: Light-emitting diode (LED_t)
- **124'**: Optical acquisition device
- **200'**: External secondary communication device
- **100**: Electric Tool
- **106**: Interface
- **108**: First digital data signal
- **110**: Second digital data signal
- **112**: Light-emitting diode (LED_t)
- **114**: Light-emitting diode (LED_r)
- **116**: Comparator
- **118**: N-MOSFET
- **120**: P-MOSFET
- **124**: Optical acquisition device
- **200**: External secondary communication device

## Claims

1. An electric tool (**100**) comprising;
a first digital control unit, that generates a first digital data signal (**108**) to be transmitted, the first digital data signal (**108**) including operational data of the electric tool (**100**);
an interface (**106**) configured to transmit the first digital data signal (**108**); wherein the interface (**106**) comprises at least one light-emitting diode (LED_t) (**112**) connected with the first digital control unit in a forward direction, and configured to transmit the first digital data signal (**108**);
**characterized in that,**
the interface (**106**) further comprising at least one light-emitting diode (LED_r) (**114**) configured to receive a second digital data signal (**110**); and
a second digital control unit, that comprises a detection circuit for detection of the second digital data signal (**110**);
wherein the at least one light-emitting diode (LED_r) (**114**) is connected with the second digital control unit in a forward direction.

2. The electric tool (**100**) according to claim 1,
wherein the detection circuit includes a comparator (116) for detection of the second digital data signal (**110**).

3. The electric tool (**100**) according to claim 1,
wherein the detection circuit includes a P-MOSFET (**118**) for detection of the second digital data signal (**110**).

4. The electric tool (**100**) according to claim 1,
wherein the detection circuit includes an N-MOSFET (**120**) for detection of the second digital data signal (**110**).

5. The electric tool (**100**) according to claim 1,
wherein the detection circuit comprises a microcontroller including an analog to digital converter (ADC) for detection of the second digital data signal (110).

6. The electric tool (100) according to any one of the preceding claims, wherein the at least one light-emitting diode LED_t (**112**) for transmission of the first digital data signal (**108**), and the at least one light-emitting diode LED_r (**114**) for receiving the second digital data signal (**110**) are the same light-emitting diode LED.

7. The electric tool (**100**) according to any one of the preceding claims, wherein the electric tool (**100**) is configured to perform bi-directional communication via the combination of the at least one light-emitting diode LED_t (**112**) and the at least one light-emitting diode LED_r (**114**).

8. The electric tool (**100**) according to any one of the preceding claims, wherein the operational data includes at least one of a testing data, a battery status, and an error state.

9. The electric tool (**100**) according to any one of the preceding claims, wherein the second digital data signal (**110**) includes at least one of programming commands, configuration commands, test commands, and process commands in end-of-line (EOL) testing.

10. The electric tool (**100**) according to any one of the preceding claims comprises,
a digital control module, wherein the digital control module includes the first digital control unit and the second digital control unit.

## Patentansprüche

1. Elektrisches Werkzeug (**100**), umfassend;
eine erste digitale Steuereinheit, die ein erstes digitales Datensignal (**108**) erzeugt, um übertragen zu werden, wobei das erste digitale Datensignal (**108**) Betriebsdaten des elektrischen Werkzeugs (**100**) einschließt;
eine Schnittstelle (**106**), die konfiguriert ist, um das erste digitale Datensignal (**108**) zu übertragen; wobei die Schnittstelle (**106**) mindestens eine Leuchtdiode (LED_t) (**112**) umfasst, die mit der ersten digitalen Steuereinheit in einer Vorwärtsrichtung verbunden ist und konfiguriert ist, um das erste digitale Datensignal (**108**) zu übertragen;
**dadurch gekennzeichnet, dass**
die Schnittstelle (**106**) ferner mindestens eine Leuchtdiode (LED_r) (**114**) umfasst, die konfiguriert ist, um ein zweites digitales Datensignal (**110**) zu empfangen; und
eine zweite digitale Steuereinheit, die eine Erkennungsschaltung zum Erkennen des zweiten digitalen Datensignals (**110**) umfasst;
wobei die mindestens eine Leuchtdiode (LED_r) (**114**) in einer Vorwärtsrichtung mit der zweiten digitalen Steuereinheit verbunden ist.

2. Elektrisches Werkzeug (**100**) nach Anspruch 1,
wobei die Erkennungsschaltung einen Komparator (116) zum Erkennen des zweiten digitalen Datensignals (**110**) einschließt.

3. Elektrisches Werkzeug (**100**) nach Anspruch 1,
wobei die Erkennungsschaltung einen P-MOSFET (**118**) zum Erkennen des zweiten digitalen Datensignals (**110**) einschließt.

4. Elektrisches Werkzeug (**100**) nach Anspruch 1,
wobei die Erkennungsschaltung einen N-MOSFET (**120**) zum Erkennen des zweiten digitalen Datensignals (**110**) einschließt.

5. Elektrisches Werkzeug (**100**) nach Anspruch 1,
wobei die Erkennungsschaltung eine Mikrosteuerung umfasst, die einen Analog-Digital-Wandler (ADC) für die Erkennung des zweiten digitalen Datensignals (110) einschließt.

6. Elektrisches Werkzeug (100) nach einem der vorstehenden Ansprüche,
wobei die mindestens eine Leuchtdiode LED_t (**112**) für eine Übertragung des ersten digitalen Datensignals (**108**), und die mindestens eine Leuchtdiode LED_r (**114**) zum Empfangen des zweiten digitalen Datensignals (**110**) die gleiche Leuchtdiode, LED, sind.

7. Elektrisches Werkzeug (**100**) nach einem der vorstehenden Ansprüche,
wobei das elektrische Werkzeug (**100**) konfiguriert ist, um eine bidirektionale Kommunikation über die Kombination der mindestens einen Leuchtdiode LED_t (**112**) und der mindestens einen Leuchtdiode LED_r (**114**) durchzuführen.

8. Elektrisches Werkzeug (**100**) nach einem der vorstehenden Ansprüche,
wobei die Betriebsdaten mindestens eines umfassen von Testdaten, einem Batteriestatus und einem Fehlerzustand.

9. Elektrisches Werkzeug (**100**) nach einem der vorstehenden Ansprüche,
wobei das zweite digitale Datensignal (**110**) mindestens einen einschließt von Programmierbefehlen, Konfigurationsbefehlen, Testbefehlen und Prozessbefehlen bei End-of-Line-Tests (EOL-Test).

10. Elektrisches Werkzeug (**100**) nach einem der vorstehenden Ansprüche, das umfasst
ein digitales Steuermodul, wobei das digitale Steuermodul die erste digitale Steuereinheit und die zweite digitale Steuereinheit einschließt.

## Revendications

1. Outil électrique (**100**) comprenant :
une première unité de commande numérique, qui génère un premier signal de données numériques (**108**) à transmettre, le premier signal de données numériques (**108**) comportant des données opérationnelles de l'outil électrique (**100**) ;
une interface (**106**) configurée pour transmettre le premier signal de données numériques (**108**) ; dans lequel l'interface (**106**) comprend au moins une diode électroluminescente (LED_t) (**112**) connectée à la première unité de commande numérique dans le sens direct, et configurée pour transmettre le premier signal de données numériques (**108**) ;
**caractérisé en ce que,**
l'interface (**106**) comprenant en outre au moins une diode électroluminescente (LED_r) (**114**) configurée pour recevoir un second signal de données numériques (**110**) ; et
une seconde unité de commande numérique, qui comprend un circuit de détection permettant la détection du second signal de données numériques (**110**) ;
dans lequel l'au moins une diode électroluminescente (LED_r) (**114**) est connectée à la seconde unité de commande numérique dans le sens direct.

2. Outil électrique (**100**) selon la revendication 1,
dans lequel le circuit de détection comporte un comparateur (116) permettant la détection du second signal de données numériques (**110**).

3. Outil électrique (**100**) selon la revendication 1,
dans lequel le circuit de détection comporte un P-MOSFET (**118**) permettant la détection du second signal de données numériques (**110**).

4. Outil électrique (**100**) selon la revendication 1,
dans lequel le circuit de détection comportant un N-MOSFET (**120)** permettant la détection du second signal de données numériques (**110**).

5. Outil électrique (**100**) selon la revendication 1,
dans lequel le circuit de détection comprend un microcontrôleur comportant un convertisseur analogique-numérique (CAN) permettant la détection du second signal de données numériques (110).

6. Outil électrique (100) selon l'une quelconque des revendications précédentes,
dans lequel l'au moins une diode électroluminescente LED_t (**112**) permettant la transmission du premier signal de données numériques (**108**), et l'au moins une diode électroluminescente LED_r (**114**) permettant la réception du second signal de données numériques (**110**) sont la même diode électroluminescente DEL.

7. Outil électrique (**100**) selon l'une quelconque des revendications précédentes,
dans lequel l'outil électrique (**100**) est configuré pour réaliser une communication bidirectionnelle par l'intermédiaire de la combinaison de l'au moins une diode électroluminescente LED_t (**112**) et de l'au moins une diode électroluminescente LED_r (**114**).

8. Outil électrique (**100**) selon l'une quelconque des revendications précédentes,
dans lequel les données opérationnelles comportent au moins l'un parmi des données de test, un état de batterie, et un état d'erreur.

9. Outil électrique (**100**) selon l'une quelconque des revendications précédentes,
dans lequel le second signal de données numériques (**110**) comporte au moins l'une parmi des instructions de programmation, des instructions de configuration, des instructions d'essai, et des instructions de processus dans le cadre d'un essai de fin de ligne (EOL).

10. Outil électrique (**100**) selon l'une quelconque des revendications précédentes,
un module de commande numérique, dans lequel le module de commande numérique comporte la première unité de commande numérique et la seconde unité de commande numérique.
